# DEMANDE DE BREVET EUROPEEN

(11) **EP 4 404 068 A1**
(43) Date de publication de la demande: **24.07.2024**
(21) Numéro de dépôt: 24151987.5
(22) Date de dépôt: 15.01.2024
(51) Int. Cl.: G06F 12/02, G06F 13/28, G06F 13/16, G06F 13/40

(54) **CIRCUIT DE CONNEXION POUR ACCES MEMOIRE**

(30) Priorité: 20.01.2023 FR 2300540
(71) Demandeur: STMicroelectronics International N.V., 1228 Plan-les-Ouates, Geneva (CH)
(72) Inventeur: PALLARDY, Loic, 72700 ROUILLON (FR); TORGUE, Alexandre, 72650 SAINT SATURNIN (FR)
(74) Mandataire: Thibon, Laurent

(57) **Abrégé**

La présente description concerne un circuit de connexion (116, 118) reliant un premier circuit (112, 114) d'un dispositif (100) à un bus (110) configuré pour permettre accès à un espace mémoire adressable (106, 108) du dispositif, le circuit de connexion étant configuré pour :
- recevoir une adresse d'entrée, transmise par le premier circuit, l'adresse d'entrée correspondant à une adresse dans une première ou dans une deuxième plage d'adresses de l'espace mémoire adressable, l'espace mémoire adressable comprenant en outre une troisième plage d'adresse, non adressable par le premier circuit ;
- comparer l'adresse d'entrée avec une adresse seuil ;
- sur la base de la comparaison, générer une partie d'une adresse de sortie, l'adresse de sortie appartenant à la deuxième ou à la troisième plage d'adresses de l'espace mémoire adressable ; et
- fournir la partie de l'adresse de sortie au bus (110).

## Description

### Domaine technique

La présente description concerne de façon générale l'accès à un espace mémoire par un circuit tel qu'un circuit périphérique du dispositif ou un circuit d'accès direct à la mémoire.

### Technique antérieure

Certains dispositifs électroniques comprennent un espace mémoire adressable dont au moins une partie n'est pas adressable par certains circuits périphériques.

En effet, certains dispositifs comprennent par exemple des processeurs 64 bits ayant accès à un espace mémoire de plus de 4 Gigabytes. Cependant ces dispositifs peuvent également comprendre des périphériques ou des circuits d'accès direct à la mémoire (en anglais "Direct Memory Access Circuits" ou "DMA Circuits") à 32 bits, qui sont limités et n'ont pas la possibilité d'adresser toutes les plages d'adresses de l'espace mémoire.

Il existe un besoin de rendre accessibles à un circuit périphérique, et/ou un autre circuit, des plages d'adresses qui ne sont pas directement adressables par ce circuit.

### Résumé de l'invention

Un mode de réalisation prévoit un circuit de connexion reliant un premier circuit d'un dispositif à un bus configuré pour permettre accès à un espace mémoire adressable du dispositif, le circuit de connexion étant configuré pour :
- recevoir une adresse d'entrée, transmise par le premier circuit, l'adresse d'entrée correspondant à une adresse dans une première ou dans une deuxième plage d'adresses de l'espace mémoire adressable, l'espace mémoire adressable comprenant en outre une troisième plage d'adresse, non adressable par le premier circuit ;
- comparer l'adresse d'entrée avec une adresse seuil ;
- sur la base de la comparaison, générer une partie d'une adresse de sortie, l'adresse de sortie appartenant à la deuxième ou à la troisième plage d'adresses de l'espace mémoire adressable ; et
- fournir la partie de l'adresse de sortie au bus.

Selon un mode de réalisation, la partie de l'adresse de sortie comprend un ou plusieurs bits d'adresse supplémentaires, et le circuit de connexion est configuré pour fournir au bus lesdits un ou plusieurs bits d'adresse supplémentaires comme bits les plus significatifs de l'adresse de sortie.

Selon un mode de réalisation, le circuit ci-dessus est configuré en outre pour :
- si l'adresse d'entrée appartient à la deuxième plage d'adresse, générer l'un ou plusieurs bits le plus significatif de l'adresse de sortie à la valeur binaire "0" ; et
- si l'adresse d'entrée appartient à la première plage d'adresse, générer l'un ou plusieurs bits le plus significatif de l'adresse de sortie à la valeur binaire "1".

Un mode de réalisation prévoit un dispositif comprenant :
- un ou plusieurs circuit mémoire définissant un espace mémoire adressable comprenant une première, une deuxième et une troisième plages d'adresses ;
- un premier circuit n'étant pas capable de générer une adresse faisant partie de la troisième plage d'adresses ;
- le circuit de connexion ci-dessus reliant le premier circuit à l'espace mémoire adressable.

Selon un mode de réalisation, le dispositif ci-dessus comprend en outre un processeur, dans lequel le circuit de connexion comprend en outre un registre, programmable par le processeur, le registre étant configuré pour mémoriser un premier bit dont la valeur définit si le circuit est dans un premier état ou dans un deuxième état, le deuxième état étant un état dans lequel le circuit de connexion est désactivé.

Selon un mode de réalisation, le registre est configuré pour mémoriser un deuxième bit, programmable par le processeur et dont la programmation verrouille l'état du circuit de connexion à l'état défini par la valeur du premier bit.

Selon un mode de réalisation, le processeur est un processeur 64 bits et le premier circuit est un circuit périphérique de 32 bits.

Selon un mode de réalisation, l'espace mémoire comprenant les deuxième et troisième plages d'adresses est mis en oeuvre par une mémoire volatile, la troisième plage d'adresse étant adressable par le processeur.

Selon un mode de réalisation, le premier circuit est un circuit périphérique du dispositif.

Selon un mode de réalisation, le premier circuit est un circuit d'accès direct à la mémoire, le circuit d'accès direct à la mémoire étant configuré pour envoyer, sur la base du contenu d'un registre, un signal d'activation au circuit de connexion, le signal d'activation programmant le circuit de connexion dans le premier état.

Selon un mode de réalisation, le premier circuit est configuré pour transmettre l'adresse d'entrée au bus relié à l'espace mémoire adressable et l'adresse de sortie correspond à la concaténation de l'adresse d'entrée avec la partie de l'adresse de sortie fournie par le circuit de connexion.

Selon un mode de réalisation, l'espace mémoire comprenant la première plage d'adresses est mis en oeuvre par une mémoire interne du dispositif.

Un mode de réalisation prévoit un procédé comprenant :
- la transmission, par un premier circuit d'un dispositif, d'une adresse d'entrée, à un circuit de connexion du dispositif, le circuit de connexion reliant le premier circuit à un bus configuré pour permettre accès à un espace mémoire adressable du dispositif, l'adresse d'entrée correspondant à une adresse dans une première ou dans une deuxième plage d'adresses d'un espace mémoire adressable, l'espace mémoire adressable comprenant en outre une troisième plage d'adresse, non adressable par le premier circuit ; et
- la comparaison par le circuit de connexion de l'adresse d'entrée avec une adresse seuil ; et
- sur la base de la comparaison, la génération, par le circuit de connexion, d'une partie d'une adresse de sortie, l'adresse de sortie appartenant à la deuxième ou à la troisième plage d'adresses de l'espace mémoire adressable ; et
- fournir la partie de l'adresse de sortie au bus.

Selon un mode de réalisation, le procédé ci-dessus comprend en outre :
- transmettre, par le premier circuit, l'adresse d'entrée au bus relié à l'espace mémoire adressable, l'adresse de sortie correspondant à la concaténation de l'adresse d'entrée avec la partie de l'adresse de sortie fournie par le circuit de connexion.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma par blocs d'un dispositif électronique selon un mode de réalisation de la présente description ;
la figure 2 illustre un exemple d'espace mémoire adressable par un circuit périphérique 32 bits ;
la figure 3 illustre un exemple d'espace mémoire adressable par un processeur 64 bits ;
la figure 4 est un schéma par bloc illustrant un circuit de connexion reliant un circuit périphérique à un espace mémoire adressable ;
la figure 5 illustre un exemple d'espace mémoire adressable par un circuit périphérique 32 bits selon un mode de réalisation de la présente description ;
la figure 6 est un exemple illustrant un registre de configuration du circuit de connexion ;
la figure 7 est un schéma par bloc illustrant un circuit de connexion reliant un circuit d'accès direct à la mémoire à un espace mémoire adressable ; et
la figure 8 est un organigramme illustrant des étapes d'un procédé d'accès à l'espace mémoire adressable.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

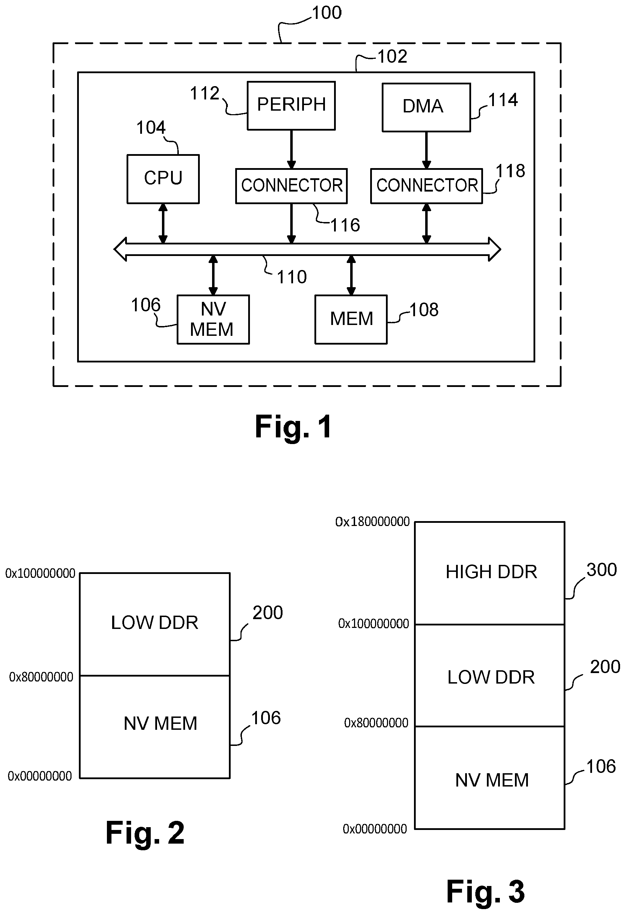

La figure 1 est un schéma par blocs d'un dispositif électronique 100 comprenant un dispositif de traitement 102 selon un mode de réalisation de la présente description.

Le dispositif électronique 100 est par exemple une carte électronique telle qu'une carte à microcircuits, un matériel à usage informatique, un circuit à microprocesseur, etc.

Le dispositif de traitement 102 comprend par exemple un processeur 104 (CPU) relié à des mémoires 106 (NV MEM) et 108 (MEM) par l'intermédiaire d'un bus 110. A titre d'exemple, la mémoire 106 est une mémoire non-volatile, par exemple une mémoire interne du dispositif. La mémoire 108 est une mémoire volatile, par exemple de type DDR SDRAM (de l'anglais "Double Data Rate Synchronous Dynamic Random Access Memory"). Dans un autre exemple la mémoire 106 est une mémoire de type Flash reliée par l'intermédiaire d'un connecteur au bus 110.

L'unité de traitement 102 comprend par exemple un circuit périphérique 112 (PERIPH). A titre d'exemple le circuit périphérique est une carte graphique, une interface de communication, ou un autre type de circuit capable d'accéder à au moins une partie de l'espace mémoire défini par les mémoires du dispositif. Selon un mode de réalisation, le circuit périphérique 112 n'a pas accès à la totalité de l'espace mémoire adressable formé par les mémoires 106 et 108. A titre d'exemple, le circuit périphérique 112 est configuré pour manipuler des mots de longueur strictement inférieure aux mots manipulés par le processeur 104, et donc de générer des adresses qui sont également de longueur strictement inférieure aux adresses générées par le processeur 104. L'espace mémoire adressable formé par les mémoires 106 et 108 est par exemple dimensionné selon les capacités d'adressage du processeur 104, et n'est alors pas entièrement adressable directement par le circuit périphérique 112. A titre d'exemple, une plage d'adresses de l'espace mémoire n'est pas directement adressable par le circuit périphérique 112. Dans un autre exemple, la taille des mots manipulés par le circuit périphérique 112 est par exemple adaptée, par le processeur 104, afin d'être supportée par les mémoires 106 et 108. Néanmoins, une zone de l'espace mémoire adressable reste inaccessible pour le circuit périphérique 112. A titre d'exemple, la zone mémoire inaccessible par le circuit périphérique 112 est une zone mémoire comprise dans la mémoire 108.

Dans un exemple, le processeur 104 est par exemple un processeur 64 bits, configuré pour manipuler des mots ayant une taille allant jusqu'à 64 bits. A titre d'exemple l'espace mémoire formé par les mémoires 106 et 108 est de taille supérieure à 4 Gigabytes, par exemple 6 Gigabytes. A titre d'exemple, la mémoire 106 est de taille 2 Gigabytes et la mémoire 108 est de taille 4 Gigabytes.

Le processeur 104 est par exemple capable d'adresser l'entièreté de l'espace mémoire adressable correspondant aux mémoires 106 et 108. Le circuit périphérique 112 est par exemple un périphérique 32 bits d'adresse. A titre d'exemple, une partie de la mémoire 108 n'est pas adressable par le circuit périphérique 112.

L'unité de traitement 102 comprend par exemple en outre, ou à la place du circuit périphérique 112, un circuit d'accès direct à la mémoire 114 (DMA). A titre d'exemple, le circuit d'accès direct à la mémoire 114 est un circuit 32 bits, et ce circuit a donc les mêmes limitations en termes des capacités d'adressage que le circuit périphérique 112.

Selon un mode de réalisation, le circuit périphérique 112 est relié au bus 110 par l'intermédiaire d'un circuit de connexion 116 et/ou le circuit d'accès direct à la mémoire 114 est relié au bus 110 par l'intermédiaire d'un circuit de connexion 118.

Selon un mode de réalisation, le circuit de connexion 116 est configuré pour générer une adresse de sortie sur la base d'une adresse d'entrée fournie par le circuit périphérique 112, et de la fournir au bus 110. De façon similaire, le circuit de connexion 116 est configuré pour générer une adresse de sortie sur la base d'une adresse d'entrée fournie par le circuit d'accès direct à la mémoire 114, et la fournir au bus 110. A titre d'exemple, les adresses d'entrée fournies par les circuits 112 et 114 sont des adresses sur 32 bits, et l'adresse de sortie est une adresse sur 33 bits. Dans certains cas, les circuits de connexion 116 et 118 sont configurés pour générer seulement le ou les bits les plus significatifs, par exemple le 33^{ème} bit, de l'adresse de sortie.

La figure 2 illustre un exemple d'espace mémoire directement adressable par le circuit périphérique 112 et/ou le circuit d'accès direct à la mémoire 114. A titre d'exemple le circuit périphérique 112 et/ou le circuit d'accès direct à la mémoire 114 sont des circuits 32 bits.

A titre d'exemple, la mémoire 106 est adressable par l'intermédiaire des adresses ayant pour valeurs hexadécimales 0x00000000 à la valeur voisine inférieure à 0x80000000 et la mémoire 108 comprend une zone 200 (LOW DRR) qui est adressable par l'intermédiaire des adresses ayant pour valeurs hexadécimales 0x80000000 à la valeur voisine inférieure à 0x100000000. La mémoire 106 est alors, par exemple, une mémoire de taille 2 Gigabytes et la zone mémoire 200 est elle aussi une mémoire de taille 2 Gigabytes. Le circuit périphérique 112 et/ou le circuit d'accès direct à la mémoire 114 est alors en capacité d'accéder au 4 Gigabytes formés par la mémoire 106 et à la zone mémoire 200.

Les plages d'adresses définissant la mémoire 106 ainsi que la zone mémoire 200 sont données à titre d'exemple et ne sont bien sûr pas limitatives, ni de par leur taille, ni de par leurs valeurs.

La figure 3 illustre un exemple d'espace mémoire adressable par le processeur 104. A titre d'exemple, le processeur 104 est un processeur 64 bits.

A titre d'exemple, l'espace mémoire adressable par le processeur 104 comprend les plages d'adresses associées à la mémoire 106. A titre d'exemple, comme décrit en relation avec la figure 2, la mémoire 106 est adressable par l'intermédiaire des adresses ayant une valeur hexadécimale entre 0x00000000 et la valeur voisine inférieure à 0x80000000. L'espace mémoire adressable par le processeur 104 comprend en outre les plages d'adresses associées à la zone 200 de la mémoire 108. A titre d'exemple, comme décrit en relation avec la figure 2, la mémoire 106 est adressable par l'intermédiaire des adresses ayant une valeur hexadécimale entre 0x80000000 et la valeur voisine inférieure à 0x100000000.

A titre d'exemple, la mémoire 108 comprend en outre une zone 300 (HIGH DDR). A titre d'exemple, la zone 300 est adressable par l'intermédiaire des adresses ayant une valeur hexadécimale entre 0x100000000 et la valeur voisine inférieure à 1x180000000. La zone 300 est par exemple adressable par le processeur 104 et n'est pas directement adressable par le circuit périphérique 112 et/ou par le circuit d'accès direct à la mémoire 114.

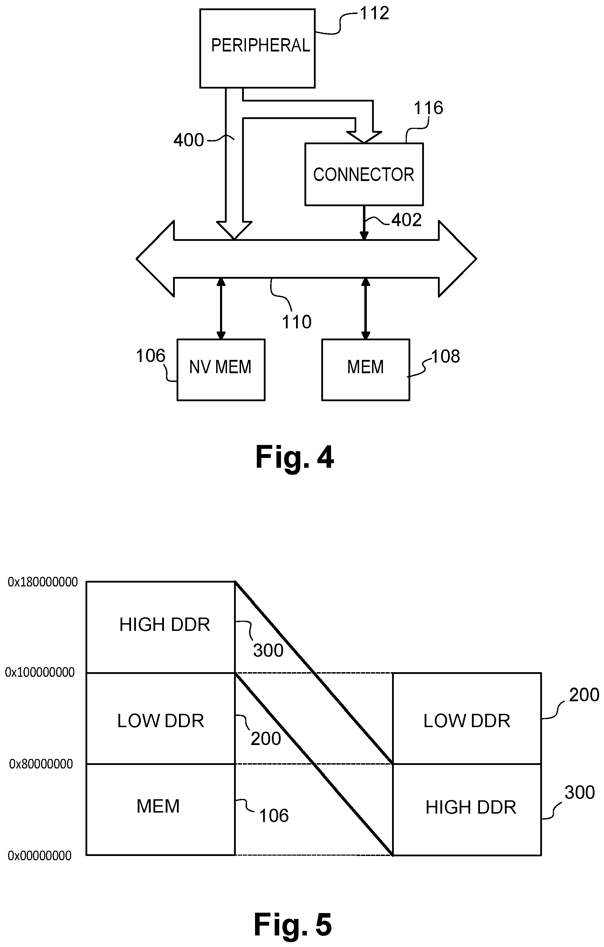

La figure 4 est un schéma par bloc illustrant une partie du dispositif 100 de la figure 1, et en particulier le circuit de connexion 116 reliant le circuit périphérique 112 à l'espace mémoire adressable associé aux mémoires 106 et 108.

A titre d'exemple le circuit périphérique 112 est un circuit 32 bits. A titre d'exemple, l'espace mémoire adressable comprend les plages d'adresses décrites en relation avec la figure 3. La zone 300 de la mémoire 108 n'est alors pas directement entièrement adressable par le circuit périphérique 112.

Selon un mode de réalisation, le circuit périphérique 112 est relié au circuit de connexion 116 et au bus 110 par l'intermédiaire d'un bus 400. Par exemple, le circuit périphérique 112 fournit, par l'intermédiaire du bus 400, des mêmes adresses au circuit de connexion 116 et au bus 110. Le circuit de connexion 116 est ensuite relié au bus 110 par l'intermédiaire d'un bus 402.

Les bus 400 et 110 illustrés en figure 4 sont par exemple des bus d'adresse utilisés pour communiquer des adresses d'accès aux mémoires 106, 108 lors d'accès, par exemple de type écriture et/ou lecture. Bien qu'ils ne soient pas illustrés dans les figures, des bus de données sont également présents entre le circuit périphérique 112 et les mémoires, permettant à des données à écrire d'être communiquées lors des accès en écriture, et/ou permettant à des données lues d'être communiquées lors des accès en lecture.

Selon un mode de réalisation, le processeur 104 est configuré pour activer, ou pour désactiver, le circuit de connexion 116 lors d'une phase de démarrage. A titre d'exemple, une instruction d'un logiciel exécuté par le processeur 104 entraine l'activation du circuit de connexion 116 en fonction de la mémoire à laquelle ce logiciel est configuré pour accéder. Par exemple, lors du démarrage de l'unité de traitement 102, le circuit périphérique 112 est capable d'accéder aux plages d'adresses associées à la mémoire 106 et le circuit de connexion 116 est par exemple désactivé. A titre d'exemple, une fois le démarrage du circuit 104 terminé, une instruction du logiciel permet l'activation du circuit de connexion 116 et le circuit périphérique 112 n'a par exemple plus accès à la mémoire 106. A titre d'exemple, lorsque la séquence de démarrage est terminée, l'accès à la mémoire 106 n'est par exemple plus utile. Lorsque, par exemple, un logiciel exécuté par le processeur 104 est configuré pour accéder à un espace mémoire de taille supérieure à l'espace associé à la zone 200, une instruction du logiciel permet l'activation du circuit de connexion 116. Ainsi, le circuit périphérique 112 a par exemple accès à l'entièreté de la mémoire 108.

Selon un mode de réalisation, lorsque le circuit de connexion 116 est désactivé, il ne fournit, par exemple, aucun bit en sortie sur le bus 402. Dans un autre mode de réalisation, lorsque le circuit de connexion 116 est désactivé, il ne fournit, par exemple, qu'un ou plusieurs bits de valeur binaire "0" en sortie sur le bus 402. Le circuit périphérique 112 transmet par exemple directement au bus 110 une ou plusieurs adresses. La ou les adresses appartiennent alors aux plages d'adresses associées à la mémoire 106 ou à la zone mémoire 200 de la mémoire 108. A titre d'exemple, la ou les adresses transmises par le circuit périphérique 112 sont codées sur 32 bits. La zone 300 de la mémoire 108 est alors non accessible par le circuit périphérique 112 lorsque le circuit de connexion 116 est désactivé.

Ainsi, les adresses programmées par le processeur 104 ne sont pas recalculées. En effet, le processeur 104 donne toujours l'ordre au circuit périphérique 112 d'accéder à une adresse appartenant par exemple à la mémoire 106 ou à la zone 200. La translation de l'adresse est effectuée par le circuit de connexion 116 et non pas par le processeur 112.

Selon un mode de réalisation, lorsque le circuit de connexion 116 est activé, le circuit périphérique 112 transmet une adresse d'entrée au circuit de connexion 116. Le circuit de connexion 116 est alors configuré pour vérifier si l'adresse est par exemple supérieure à une adresse seuil. A titre d'exemple, le circuit de connexion 116 vérifie si l'adresse est plus grande que 0x80000000, ce qui correspond, dans l'exemple décrit en relation avec la figure 3, à vérifier si l'adresse transmise par le circuit périphérique 112 est une adresse de la zone 106 ou de la zone 200. Dans un autre exemple, le circuit de connexion 116 est configuré pour déterminer si l'adresse appartient à une plage d'adresse, par exemple associée à une zone de la mémoire 106 ou de la mémoire 108. Selon un mode de réalisation, le circuit de connexion 116 est configuré pour générer un ou plusieurs bits, par exemple les bits les plus significatifs d'une adresse de sortie sur la base de la comparaison.

A titre d'exemple, si l'adresse d'entrée fournie par le circuit périphérique 112 est supérieure à l'adresse seuil, par exemple égale ou supérieure à 0x80000000, le circuit de connexion 116 est configuré pour ne fournir aucun bit en sortie sur le bus 402, ou pour ne fournir qu'un ou plusieurs bits de valeur binaire "0" en sortie sur le bus 402. L'adresse de l'accès mémoire, qui va être appelée "adresse de sortie" dans la présente description, et qui est la combinaison des adresses fournies par bus 402 et par le bus 400, afin d'exécuter un accès à la mémoire, est donc égale à l'adresse d'entrée fournie par le circuit périphérique 112 sur le bus 400. Dans l'exemple décrit en relation avec la figure 3, si l'adresse d'entrée fournie par le circuit périphérique 112 est supérieure à l'adresse seuil, elle appartient à la zone 200, et dans ce cas, rien n'est modifié et le circuit périphérique 112 accède bien à la zone 200 comme demandé.

A titre d'exemple, lorsque le processeur 104 donne l'ordre au circuit périphérique 112 d'accéder à la mémoire 106, par exemple en indiquant une adresse associée à la plage d'adresse associée à la mémoire 106, et que le circuit de connexion 116 est activé, alors le circuit périphérique 112 accède à la zone 300, bien que l'adresse ordonnée appartienne à la plage d'adresse définissant la mémoire 106.

A titre d'exemple, si l'adresse d'entrée fournie par le circuit périphérique 112 est inférieure à l'adresse seuil, par exemple inférieure à 0x80000000, l'adresse de sortie fournie au bus 110 est une nouvelle adresse, fourni en partie par le circuit de connexion 116. Par exemple, dans ce cas, l'adresse de sortie, fournie au bus 110, est une adresse de sortie appartenant par exemple à la zone 300 de la mémoire 108. Par exemple, l'adresse de sortie est composée de l'adresse d'entrée fournie sur le bus 400, et une partie fournie par le circuit de connexion 116. Cette partie consiste par exemple en un ou plusieurs bits d'adresse supplémentaires, qui sont par exemple le ou les bit(s) le plus significatifs de l'adresse de sortie. A titre d'exemple, les 32 bits les moins significatifs de l'adresse de sortie générée par le circuit de connexion 116 correspondent aux 32 bits de l'adresse d'entrée et le circuit de connexion génère en outre un 33^{ème} bit, étant le bit le plus significatif, de valeur binaire "1". Ainsi, une adresse appartenant à la plage d'adresse associée à la mémoire 106 est modifiée, ou translatée, en une adresse appartenant à la zone 300.

A titre d'exemple, le circuit de connexion 116 est configuré pour programmer le 33^{ème} bit à la valeur binaire "0" lorsque l'adresse d'entrée appartient à la plage d'adresse associée à la zone 200 et pour le programmer à la valeur binaire "1" lorsque l'adresse d'entrée appartient à la plage d'adresse associée à la mémoire 106.

La figure 5 illustre un exemple de l'espace mémoire adressable par le circuit périphérique 112 lorsque le circuit de connexion 116 est activé.

A titre d'exemple, le circuit de connexion 116 est configuré pour programmer à la valeur 1 un 33eme bit d'adresse lorsque la valeur de l'adresse d'entrée, fournie par le circuit périphérique 112, appartient à la plage d'adresse 0x00000000 à l'adresse voisine inférieure à 0x80000000, par exemple lorsque l'adresse d'entrée est une adresse de la mémoire 106. La zone 300 de la mémoire 108 est alors accessible par le circuit périphérique 112. A titre d'exemple, le circuit de connexion 116 est en outre configuré pour programmer à la valeur binaire "0" le 33^{ème} bit de l'adresse de sortie lorsque l'adresse d'entrée appartient à la plage d'adresses allant de 0x80000000 à l'adresse voisine inférieure à 0x100000000, autrement dit lorsque le circuit périphérique 112 souhaite accéder à la zone 200. L'adresse d'entrée n'est, dans ce cas, pas modifiée et le circuit périphérique 112 accède à la zone 200.

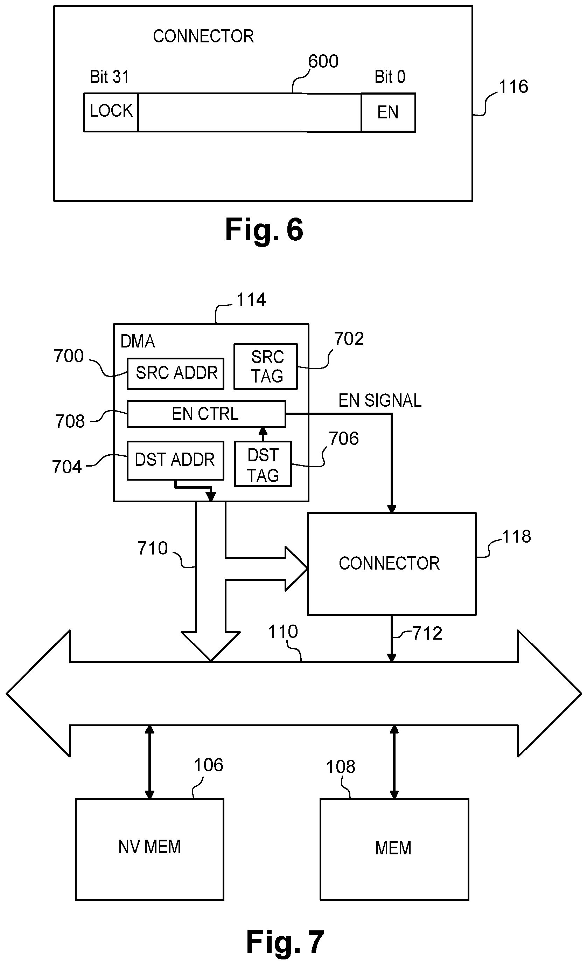

La figure 6 illustre un exemple d'un registre de configuration du circuit de connexion 116.

Selon un mode de réalisation, le circuit de connexion 116 comprend un registre 600. A titre d'exemple, le registre 600 est de longueur d'au moins 2 bits, et dans l'exemple de la figure 6, est de longueur de 32 bits, comprenant des bits allant d'un bit 0 (Bit 0) à un bit 31 (Bit 31). A titre d'exemple, le bit 0 est programmable, par exemple par le processeur 104. A titre d'exemple, lors du démarrage du processeur 104, le processeur 104 détermine si le circuit de connexion 116 est à activer ou à désactiver. A titre d'exemple, le logiciel exécuté par le processeur 104 comprend une instruction permettant la programmation du bit 0 et/ou du bit 31. A titre d'exemple la programmation du bit 0 et/ou du bit 31 s'effectue sur la base de la taille de la mémoire 108 et/ou sur l'allocation de fonctions mémoire réalisée par le logiciel. A titre d'exemple, le logiciel comprend une ou plusieurs indications des zones mémoires auxquelles le circuit périphérique 112 est configuré pour accéder et la programmation du bit 0 et/ou du bit 31 s'effectue sur la base de ces indications. A titre d'exemple, lorsque le bit 0 (EN) du registre 600 est programmé à la valeur 1, le circuit de connexion 116 est activé et lorsque le bit 0 est programmé à la valeur 0, le circuit de connexion 116 est désactivé. Cette configuration de programmation est donnée à titre d'exemple, la programmation du bit 0 à l'état 0 peut, dans un autre exemple, rendre actif le circuit de connexion 116.

A titre d'exemple, le bit 31 du registre est en outre programmable, par exemple par le processeur 104, lors de son démarrage. A titre d'exemple, l'état du bit 31 indique si l'état du circuit de connexion 116, c'est à dire activé ou désactivé, est verrouillé (LOCK) ou non. A titre d'exemple, une programmation à l'état 1 du bit 31 implique le verrouillage, dans l'état indiqué par l'état du bit 0, du circuit de connexion 116 et une programmation à l'état 0 indique son déverrouillage. L'état de verrouillage du circuit de connexion 116 implique, par exemple, que le bit 0 n'est pas reprogrammable, par le processeur 104. A titre d'exemple, lorsque le circuit de connexion est verrouillé, le bit 0 est reprogrammable uniquement lors d'un nouveau redémarrage de l'unité de traitement 102.

La figure 7 est un schéma par bloc illustrant une partie du dispositif 100 de la figure 1, et en particulier le circuit de connexion 118 reliant le circuit d'accès direct à la mémoire 114 à l'espace mémoire adressable formé par exemple par les mémoires 106 et 108.

A titre d'exemple, le circuit d'accès direct à la mémoire 114 comprend des registres 700 (SRC ADDR) et 702 (SRC TAG). Le registre 700 est par exemple configuré pour stocker, par exemple de manière temporaire, une adresse source. A titre d'exemple, l'adresse source correspond à une adresse de l'espace mémoire adressable à laquelle se trouve une donnée à laquelle le circuit d'accès direct à la mémoire 114 est configuré à accéder, par exemple en lecture. A titre d'exemple, le circuit d'accès direct à la mémoire 114 est un circuit 32 bits et l'adresse source contenue dans le registre 700 est une adresse sur 32 bits. Dans l'exemple décrit en relation avec la figure 3, l'adresse source est une adresse appartenant aux plages d'adresses associées à la mémoire 106 ou à la zone 200 de la mémoire 108. En particulier, le circuit d'accès direct à la mémoire 114 n'est pas en capacité d'adresser la zone 300 de la mémoire 108.

A titre d'exemple, le registre 702 est configuré pour stocker une valeur d'indication, par exemple sous forme d'une donnée d'au moins deux bits. A titre d'exemple la valeur d'indication est programmée suite à l'exécution d'une instruction d'un logiciel exécuté par le processeur 104 sur la base de l'adresse source et/ ou de l'adresse de destination. La valeur d'indication est par exemple une indication supplémentaire à l'adresse source, identifiant la mémoire, ou la zone mémoire, à laquelle le circuit d'accès direct à la mémoire 114 souhaite accéder.

Le circuit d'accès direct à la mémoire 114 comprend en outre des registres 704 (DST ADDR) et 706 (DST TAG). A titre d'exemple, le registre 704 est configuré pour stocker une adresse de destination, par exemple codée sur 32 bits. A titre d'exemple, l'adresse de destination correspond à une adresse de la mémoire 106 ou de la mémoire 108 à laquelle le circuit d'accès direct à la mémoire 114 souhaite par exemple écrire la donnée identifiée par l'adresse source. A titre d'exemple, le registre 706 est configuré pour stocker une valeur d'indication indiquant à quelle zone mémoire le circuit d'accès direct à la mémoire 114 est configuré à accéder, par exemple en écriture.

A titre d'exemple, pour les registres 702 et 706, une valeur binaire d'indication égale à "00" indique que le circuit d'accès direct à la mémoire 114 accédera à une première zone de la mémoire 106, par exemple réservée à du stockage associé au circuit périphérique. A titre d'exemple, une valeur binaire d'indication égale à "01" indique que le circuit d'accès direct à la mémoire 114 accédera à une deuxième zone de la mémoire 106, par exemple réservée à du stockage interne du dispositif 100. Selon un mode de réalisation, lorsque la valeur d'indication indique que le circuit d'accès direct à la mémoire 114 souhaite accéder à la mémoire 106, le circuit de connexion 118 est désactivé. A titre d'exemple, une valeur d'indication égale à 10 indique que le circuit d'accès à la mémoire 114 souhaite accéder à la mémoire 108.

Selon un mode de réalisation, le circuit d'accès direct à la mémoire 114 comprend en outre un circuit de contrôle 708 (EN CTRL) configuré pour activer le circuit de connexion 118. A titre d'exemple, les registres 702 et 704 sont reliés au circuit de contrôle 708, et le circuit de contrôle 708 est configuré pour envoyer un signal EN SIGNAL au circuit de connexion 118 lorsque la valeur d'indication stockée dans le registre 702, ou dans le registre 706, indique que le circuit d'accès direct à la mémoire 114 souhaite accéder à la mémoire 108.

Selon un mode de réalisation, les registres 702 et 706 sont configurés pour transmettre l'adresse source, respectivement l'adresse de destination, qu'ils contiennent au bus 110, par exemple par l'intermédiaire d'un bus 710. A titre d'exemple, les 32 bits composant l'adresse source, ou l'adresse de destination, sont transmis au bus 110 par l'intermédiaire du bus 710.

Les bus 710 et 110 illustrés en figure 7 sont par exemple des bus d'adresse utilisés pour communiquer des adresses d'accès aux mémoires 106, 108 lors des accès, par exemple de type écriture et/ou lecture. Bien qu'ils ne soient pas illustrés dans les figures, des bus de données sont également présents entre le circuit 114 et les mémoires, permettant à des données à écrire d'être communiquées lors des accès en écriture, et/ou permettant à des données lues d'être communiquées lors des accès en lecture.

Selon un mode de réalisation, lorsque le circuit de connexion 118 est activé, le circuit de connexion est configuré pour comparer l'adresse source, ou l'adresse de destination, avec une adresse seuil, ou avec une plage d'adresses. A titre d'exemple, le circuit de connexion 118 est configuré pour déterminer si l'adresse source, ou l'adresse de destination, appartient à la plage d'adresses associée à la mémoire 106. Si c'est le cas, le circuit de connexion 118 est par exemple configuré pour programmer à la valeur binaire "1" un 33eme bit d'adresse de l'adresse source, ou de l'adresse de destination. De cette façon, une adresse appartenant à la mémoire 106 est translatée vers une adresse appartenant à la zone 300 de la mémoire 108. A titre d'exemple, si le circuit de connexion 118 détermine que l'adresse source, ou l'adresse de destination, appartient à la plage d'adresse définissant la zone 200 de la mémoire 108, alors le circuit de connexion 118 est configuré pour programmer à la valeur binaire "0" le 33^{ème} bit d'adresse de l'adresse source ou de l'adresse de destination. De cette façon, l'adresse source, ou l'adresse de destination, n'est pas modifiée. A titre d'exemple, le circuit de connexion 118 est configuré pour transmettre la valeur du 33^{ème} bit d'adresse au bus 110 par l'intermédiaire d'un bus 712.

L'utilisation des valeurs d'indication, dans les registres 702 et 706, permet d'activer et désactiver, de manière dynamique, le circuit de connexion 118, ainsi il est par exemple possible de, dans un premier temps, lire une donnée dans la zone 200 ou dans la mémoire 106, lorsque le circuit de connexion 118 est désactivé et par exemple l'écrire dans la zone 300 de la mémoire 108 après avoir activé le circuit de connexion 118.

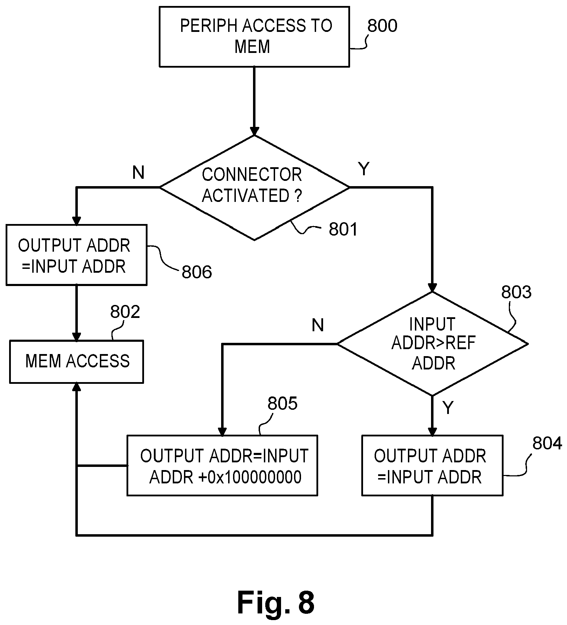

La figure 8 est un organigramme décrivant des étapes d'un procédé d'accès à un espace mémoire adressable, formée par exemple par les mémoires 106 et 108. A titre d'exemple, le procédé est mis en oeuvre par l'intermédiaire du circuit de connexion 116 ou 118. L'espace mémoire adressable n'est par exemple pas entièrement adressable par le circuit périphérique 112 ou par le circuit d'accès direct à la mémoire 114.

Dans une étape 800 (PERIPH ACCESS TO MEM), le circuit périphérique 112 ou le circuit d'accès direct à la mémoire 114 initie une demande d'accès à l'espace mémoire adressable. A titre d'exemple, l'adresse d'entrée est une adresse comprise soit dans la plage d'adresse associée à la mémoire 106, soit dans celle associée à la zone 200. En particulier, le circuit périphérique 112 ou le circuit d'accès direct à la mémoire 114 n'est pas en capacité d'adresser la zone 300 de la mémoire 108.

Dans une étape 801 (CONNECTOR ACTIVATED?), postérieure à l'étape 800, il est vérifié si le circuit de connexion 116 ou 118 est activé. A titre d'exemple, durant la réalisation de l'étape 801, le circuit périphérique 112 ou le circuit d'accès direct à la mémoire 114 transmet l'adresse d'entrée au bus 400 ou 710.

Si le circuit de connexion 116 ou 118 est désactivé (branche N), le procédé continue dans une étape 806 (OUTPUT ADDR=INPUT ADDR). A titre d'exemple, lors de la réalisation de l'étape 806, une adresse de sortie est générée par le processeur 104, par exemple en adaptant l'adresse d'entrée. A titre d'exemple, l'adresse d'entrée est une adresse sur 32 bits et le processeur 104 la convertit vers une adresse sur 33 bits. L'étape de sortie générée permet alors au circuit périphérique d'accéder à l'adresse mémoire souhaitée. En d'autres termes, l'adresse de sortie correspond à l'adresse d'entrée. L'adresse de sortie générée appartient donc, par exemple, à la zone mémoire 106 ou 200.

Suite à l'étape 806, le circuit périphérique 104 accède, dans une étape 802 (MEM ACCESS), par exemple à la mémoire 106 ou à la zone 200 de la mémoire 108, par l'adresse de sortie, qui est transmise au bus 110.

Si le circuit de connexion 116 ou 118 est activé (branche Y en sortie de l'étape 801), le procédé continue dans une étape 803 (INPUT ADDR>REF ADDR ?). Le circuit de connexion 116 ou 118 compare par exemple l'adresse d'entrée, préalablement transmise par le circuit périphérique 112 ou par le circuit d'accès direct à la mémoire 114, avec une adresse seuil. A titre d'exemple, le circuit de connexion 116 ou 118 détermine si l'adresse d'entrée est par exemple supérieure à l'adresse 0x80000000, ce qui correspond à vérifier si l'adresse d'entrée appartient à la zone 200 de la mémoire 108. L'adresse 0x80000000 est donnée à titre d'exemple et n'est bien sûr pas limitative. D'autres adresses, ou des plages d'adresses associées aux mémoires 106 et 108 ou à d'autres mémoire peuvent bien sûr être utilisées.

Si l'adresse d'entrée est par exemple supérieure à l'adresse seuil (branche Y), le procédé continue dans une étape 804 (OUTPUT ADDR=INPUT ADDR), dans laquelle une adresse de sortie fournie au bus 110 est identique à l'adresse d'entrée. Dans un exemple, l'adresse d'entrée, par exemple codée sur 32 bits, est transmise au bus 110 et le circuit de connexion 116 ou 118 programme par exemple un 33eme bit à zéro qu'il fournit au bus 110. Ainsi l'adresse de sortie est identique à l'adresse d'entrée.

Si l'adresse d'entrée n'est, par exemple, pas supérieure à l'adresse seuil (branche N), le circuit de connexion 116, ou 118, est configuré pour modifier l'adresse d'entrée dans une étape 805 (OUTPUT ADDR =INPUT ADDR+0x100000000). A titre d'exemple, si l'adresse d'entrée est inférieure à l'adresse seuil, cela veut dire que l'adresse d'entrée appartient à la mémoire 106. A titre d'exemple, la modification de l'adresse consiste en une translation vers une adresse appartenant à la zone 300. A titre d'exemple, les 32 bits les moins significatifs de l'adresse de sortie sont identiques au 32 bits de l'adresse d'entrée et le circuit de connexion 116 ou 118 programme un 33ème, comme le bit le plus significatif de l'adresse de sortie à la valeur binaire "1". L'adresse de sortie, correspondant à la concaténation de l'adresse d'entrée avec la partie de l'adresse de sortie fournie par le circuit de connexion 116 ou 118, est ensuite fournie au bus 110. Ainsi l'adresse de sortie correspond par exemple à une adresse de la zone 300.

Suite à la réalisation de l'étape 804 ou de l'étape 805, le procédé se termine dans une réalisation de l'étape 802, dans laquelle le circuit périphérique 112 ou le circuit d'accès direct à la mémoire 114 accède à l'adresse d'entrée dans l'espace mémoire adressable.

Un avantage des modes de réalisation décrits, est qu'ils permettent à un circuit périphérique, ou un autre circuit, d'accéder à des zones mémoires qu'il ne peuvent pas adresser directement.

Un autre avantage des modes de réalisation décrits est qu'ils permettent à un circuit périphérique d'étendre ses capacités. A titre d'exemple, un circuit périphérique configuré pour générer des adresses sur 32 bits a la capacité d'adresser une mémoire dont au moins une partie des adresses sont sur 33 bits.

Un autre avantage des modes de réalisation décrits est qu'ils ne nécessitent pas une quelconque configuration des circuits périphériques. Ainsi, n'importe quel circuit périphérique relié au circuit de connexion bénéficie des avantages apportés par le circuit de connexion.

Un autre avantage des modes de réalisation décrits est que le processeur n'a pas à être reprogrammé. En effet, les adresses ordonnées par le processeur n'ont pas à être recalculées, par exemple par l'intermédiaire d'une table de translation.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la taille de la mémoire adressable peut varier et ainsi les plages d'adresse définissant les différentes mémoires et/ou zones mémoire peuvent varier. De même, les valeurs d'indications stockées en association des adresses sources ou de destination dans le circuit d'accès direct à la mémoire peuvent varier.

Enfin, la mise en oeuvre pratique des modes de réalisation et variantes décrits est à la portée de la personne du métier à partir des indications fonctionnelles données ci-dessus.

## Revendications

1. Circuit de connexion (116, 118) reliant un premier circuit (112, 114) d'un dispositif (100) à un bus (110) configuré pour permettre accès à un espace mémoire adressable (106, 108) du dispositif, le circuit de connexion étant configuré pour :
- recevoir une adresse d'entrée, transmise par le premier circuit, l'adresse d'entrée correspondant à une adresse dans une première ou dans une deuxième plage d'adresses (106, 200) de l'espace mémoire adressable, l'espace mémoire adressable comprenant en outre une troisième plage d'adresse (300), non adressable par le premier circuit ;
- comparer l'adresse d'entrée avec une adresse seuil ;
- sur la base de la comparaison, générer une partie d'une adresse de sortie, l'adresse de sortie appartenant à la deuxième ou à la troisième plage d'adresses (200, 300) de l'espace mémoire adressable ; et
- fournir la partie de l'adresse de sortie au bus (110).

2. Circuit de connexion selon la revendication 1, dans lequel la partie de l'adresse de sortie comprend un ou plusieurs bits d'adresse supplémentaires, et le circuit de connexion (116, 118) est configuré pour fournir au bus (110) lesdits un ou plusieurs bits d'adresse supplémentaires comme bits les plus significatifs de l'adresse de sortie.

3. Circuit de connexion selon la revendication 1 ou 2, configuré en outre pour :
- si l'adresse d'entrée appartient à la deuxième plage d'adresse (200), générer l'un ou plusieurs bits le plus significatif de l'adresse de sortie à la valeur binaire "0" ; et
- si l'adresse d'entrée appartient à la première plage d'adresse (106), générer l'un ou plusieurs bits le plus significatif de l'adresse de sortie à la valeur binaire "1".

4. Dispositif comprenant :
- un ou plusieurs circuits mémoires (106, 108) définissant un espace mémoire adressable comprenant une première, une deuxième et une troisième plages d'adresses (106, 200, 300) ;
- un premier circuit (112, 114) n'étant pas capable de générer une adresse faisant partie de la troisième plage d'adresses ;
- le circuit de connexion (116, 118) selon l'une quelconque des revendications 1 à 3 reliant le premier circuit à l'espace mémoire adressable.

5. Dispositif selon la revendication 4, comprenant en outre un processeur (104), dans lequel le circuit de connexion (116) comprend en outre un registre (600), programmable par le processeur, le registre étant configuré pour mémoriser un premier bit dont la valeur définit si le circuit est dans un premier état ou dans un deuxième état, le deuxième état étant un état dans lequel le circuit de connexion est désactivé.

6. Dispositif selon la revendication 5, dans lequel le registre (600) est configuré pour mémoriser un deuxième bit, programmable par le processeur et dont la programmation verrouille l'état du circuit de connexion (116) à l'état défini par la valeur du premier bit.

7. Dispositif selon la revendication 5 ou 6, dans lequel le processeur (104) est un processeur 64 bits et le premier circuit (112, 114) est un circuit périphérique de 32 bits.

8. Dispositif selon l'une quelconque des revendications 5 à 7, dans lequel l'espace mémoire comprenant les deuxième et troisième plages d'adresses est mis en oeuvre par une mémoire volatile (108), la troisième plage d'adresse (300) étant adressable par le processeur (104).

9. Dispositif selon l'une quelconque des revendications 5 à 8, dans lequel le premier circuit est un circuit périphérique (112) du dispositif.

10. Dispositif selon l'une quelconque des revendications 5 à 8, dans lequel le premier circuit est un circuit d'accès direct à la mémoire (114), le circuit d'accès direct à la mémoire (114) étant configuré pour envoyer, sur la base du contenu d'un registre (702, 706), un signal d'activation au circuit de connexion, le signal d'activation programmant le circuit de connexion dans le premier état.

11. Dispositif selon l'une quelconque des revendications 4 à 10, dans lequel le premier circuit est configuré pour transmettre l'adresse d'entrée au bus (110) relié à l'espace mémoire adressable et dans lequel l'adresse de sortie correspond à la concaténation de l'adresse d'entrée avec la partie de l'adresse de sortie fournie par le circuit de connexion (118).

12. Dispositif selon l'une quelconque des revendications 4 à 11, dans lequel l'espace mémoire comprenant la première plage d'adresses est mis en oeuvre par une mémoire interne (106) du dispositif.

13. Procédé comprenant :
- la transmission, par un premier circuit d'un dispositif, d'une adresse d'entrée, à un circuit de connexion du dispositif, le circuit de connexion reliant le premier circuit à un bus (110) configuré pour permettre accès à un espace mémoire adressable (106, 108) du dispositif, l'adresse d'entrée correspondant à une adresse dans une première ou dans une deuxième plage d'adresses d'un espace mémoire adressable, l'espace mémoire adressable comprenant en outre une troisième plage d'adresse, non adressable par le premier circuit ; et
- la comparaison par le circuit de connexion de l'adresse d'entrée avec une adresse seuil ; et
- sur la base de la comparaison, la génération, par le circuit de connexion, d'une partie d'une adresse de sortie, l'adresse de sortie appartenant à la deuxième ou à la troisième plage d'adresses (200, 300) de l'espace mémoire adressable ; et
- fournir la partie de l'adresse de sortie au bus (110).

14. Procédé selon la revendication 13, comprenant en outre :
- transmettre, par le premier circuit, l'adresse d'entrée au bus (110) relié à l'espace mémoire adressable, l'adresse de sortie correspondant à la concaténation de l'adresse d'entrée avec la partie de l'adresse de sortie fournie par le circuit de connexion.
